(19) Europäisches Patentamt
European Patent Office
Office européen des brevets

(11) Numéro de publication: **0 005 661**
**A1**

(12) # DEMANDE DE BREVET EUROPEEN

(21) Numéro de dépôt: **79400289.9**

(22) Date de dépôt: **07.05.79**

(51) Int. Cl.[2]: **G 06 F 15/02**
**G 09 F 9/00**

(30) Priorité: **12.05.78 FR 7814239**

(43) Date de publication de la demande:
**28.11.79 Bulletin 79/24**

(84) Etats Contractants Désignés:
**BE CH DE GB IT LU NL**

(71) Demandeur: **SOCIETE DE REALISATIONS EN INFORMATIQUE ET AUTOMATISME STERIA**
**26, Avenue de l'Europe**
**F-78140 Velizy-Villacoublay(FR)**

(84) Etats Contractants Désignés:
**BE CH DE GB IT LU NL**

(71) Demandeur: **Nauges, Louis**
**2, rue de Commaille**
**F-75007 Paris(FR)**

(84) Etats Contractants Désignés:
**BE CH DE GB IT LU NL**

(72) Inventeur: **Nauges, Louis**
**2, rue de Commaille**
**F-75007 Paris(FR)**

(72) Inventeur: **Deforeit, Christian**
**26, Avenue de l'Europe**
**F-78140 Velizy-Villacoublay(FR)**

(74) Mandataire: **Bultez, Dominique**
**26, Avenue de l'Europe**
**F-78140 Velizy-Villacoublay(FR)**

(54) **Agenda électronique.**

(57) Dans un boîtier de dimensions réduites à deux ou trois volets sont disposés des moyens d'entrée de données alphanumériques sous la forme d'un clavier de machine à écrire, des moyens de mémorisation des données introduites comportant une mémoire permanente de bloc-note, une mémoire de texte pouvant contenir un grand nombre de caractères et une mémoire de ligne associée avec une rangée de dispositifs d'affichages alphanumériques. L'ensemble fonctionne grâce à des moyens de commande qui permettent l'inscription, l'effacement, la modification, la recherche et l'affichage de données ou de blocs de données dans les mémoires, ainsi que des facilités de traitement de texte.

FIG 2

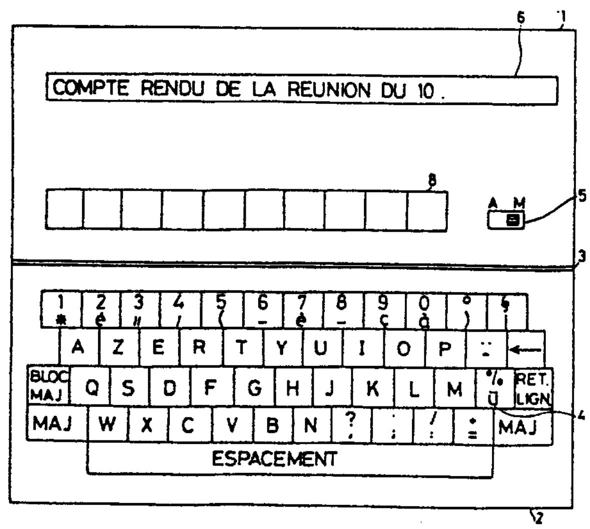


EP 0 005 661 A1

Croydon Printing Company Ltd.

0005661



Agenda électronique

La présente invention concerne un agenda électronique, facilement transportable, autonome et d'utilisation aisée.

On connaît déjà un certain nombre d'appareils électroniques transportables dans une poche et autonomes, permettant d'effectuer des calculs, d'indiquer l'heure et d'émettre des signaux comme les montres-réveils. D'autres appareils électroniques permettent d'afficher certains messages programmés à l'avance, à certaines heures de la journée et à certaines dates.

Ces appareils ne sont cependant pas conçus pour emmagasiner une masse importante d'informations numériques et alphabétiques, ni pour retrouver rapidement ces informations sous une forme parfaitement lisible.

Un but de la présente invention est d'obtenir un agenda électronique qui ne présente pas ces inconvénients tout en restant autonome et de dimensions réduites afin d'être facilement transportable dans une poche.

Selon une caractéristique de la présente invention, l'agenda électronique comporte, dans un boitier :

- des moyens d'entrée de données alphanumériques ;
- des moyens de mémorisation des données introduites ;

- des moyens de visualisation de tout ou partie des données introduites, et
- des moyens de commande et de contrôle de ces moyens.

L'ensemble des moyens précités sont réunis dans un boîtier comportant notamment un clavier plat similaire à celui d'une machine à dactylographier et des éléments d'affichage alphanumériques. Afin d'être facilement transportable, le boîtier ayant au plus les dimensions d'une poche, celui-ci se compose de deux ou trois volets repliables sur lesquels sont disposés le clavier et les éléments d'affichage. Une fois déplié, les dimensions du boîtier deviennent suffisantes pour permettre une manipulation aisée des touches du clavier et une lecture commode des informations affichées, tandis que replié, l'agenda retrouve des dimensions réduites et les éléments sensibles sont protégès pendant le transport.

L'intérieur du boîtier contient les circuits éléctroniques et la batterie d'alimentation de ces circuits qui confère à l'agenda son autonomie. Ces circuits électroniques réalisent un grande nombre de fonctions qui apportent pour l'utilisateur une simplicité d'utilisation de l'agenda.

L'agenda permet de retrouver rapidement et de présenter les informations qu'il contient. Ces informations peuvent également être transmises sur un lecteur-enregistreur de cassette, un écran de télévision, une imprimante, ou un réseau de transmission vers un autre agenda ou vers un système informatique.

L'agenda possède également de nombreuses possibilités de modifications, de corrections, d'effacement, de mise à jour des informations qu'il contient. Sa capacité apparaît en outre pratiquement illimitée dans la mesure où, après l'utilisation, les informations devenues inutiles peuvent être éliminées.

Dans ce qui suit, l'invention est exposée plus en détail, à l'aide de dessins représentant des exemples de réalisations.

La figure 1 représente, en perspective, une vue d'ensemble de l'agenda électronique ; la figure 2 représente l'agenda de la figure 1, en vue de dessus et en position ouverte ; la figure 3 représente, en perspective, une vue d'ensemble d'une variante de réalisation de l'agenda ; la figure 4 représente l'agenda de la figure 3, en vue de dessus et en position ouverte ; enfin la figure 5 représente le schéma des circuits électroniques de l'agenda.

Les figures 1 et 2 représentent un agenda électronique qui comporte deux volets rectangulaires 1 et 2, plats et articulés selon leur plus grande longueur autour d'une charnière 3. Chaque volet a entre 4 et 6 mm d'épaisseur, entre 80 et 100 mm de largeur et entre 150 et 200 mm de longueur. Fermé, les dimensions de l'agenda sont sensiblement inférieures à celles d'un livre de poche. Les faces extérieures des volets sont constituées en un matériau rigide (matière plastique incassable ou métal léger). Les circuits électroniques dans les volets sont reliés par des cables souples en nappe situés au niveau de la charnière.

La face interne du volet 2 comporte un clavier alphanumérique 4 similaire à celui d'une machine dactylographique, et de dimension standard. Les touches sont disposées selon le type AZERTY ou QWERTY. Chaque touche actionne un contact électronique lorsqu'elle subit une pression ou un effleurement. Des circuits électroniques associés à ces contacts effectuent de manière connue la reconnaissance des touches enfoncées ou effleurées et délivrent, pour chaque action, une information codée particulière à cette touche, et un signal électrique destiné à actionner les moyens de commande et de contrôle associés aux autres moyens. Ces circuits sont considérés inclus dans les moyens d'entrée de données.

La face interne du volet 1 comporte un moyen de visualisation se présentant sous la forme d'une ligne de 15 à 50 caractères alphanumériques 6 à diodes électroluminescentes, à plasma ou, de préférence, à cristaux liquides (consommation moindre). Ce volet comporte en outre une rangée de touches de fonctions 8 qui servent à actionner les moyens de commande et de contrôle et les autres organes de l'agenda comme indiqué dans la suite de la description. Sur le même volet 1 est encore placé un interrupteur marche-arrêt 5 destiné à alimenter les circuits électroniques de l'agenda par une batterie interne (pour une utilisation autonome) ou par un dispositif d'alimentation externe qui se connecte par une prise 9 et qui permet également la recharge de la batterie interne.

Une autre prise 7 est également prévue pour l'échange d'informations entre l'agenda et des moyens extérieurs telle qu'une imprimante, un téléviseur, un enregistreur-lecteur de bande ou cassette, ou un système informatique, par l'intermédiaire ou non d'un réseau de transmission et les moyens de raccordement associés.

Les figures 3 et 4 représentent une variante de réalisation de l'agenda électronique. Celui-ci comporte 3 volets 10, 11 et 12 rectangulaires de dimensions similaires à celles de la variante représentée sur les figures 1 et 2. Les volets sont articulés autour de charnières 13 et 14 et les circuits contenus dans ces volets sont reliés par des cables souples en nappe, disposés au niveau de charnières.

Le clavier à touches de machine à écrire 4 est réparti sur les 3 volets. De même que la rangée de dispositifs d'affichage 6, et les touches de fonction 8. Comme la variante précédente, l'agenda comporte un interrupteur marche-arrêt 5, une prise 9 d'alimentation et de recharge de la batterie incorporée et une prise 7 de transfert de données.

L'interrupteur 5 peut être du type à poussoir fugitif mettant automatiquement en marche l'agenda quand celui-ci est déplié, et coupant l'alimentation automatiquement quand l'agenda est replié, par la simple pression d'un autre volet sur l'interrupteur.

La figure 5 représente les circuits électroniques de l'agenda contenus dans l'épaisseur des volets.

L'agenda comporte 3 types de mémoires :

- une mémoire "bloc-note" 20 permettant le stockage permanent d'informations (noms, adresses, numéros de téléphone, rendez-vous, etc...) même en cas d'arrêt de la machine. Cette mémoire utilise des circuits mémoire à écriture et lecture, du type CMOS alimentés en permanence par la batterie, ou à bulles magnétiques ;
- une mémoire "texte" 21 qui peut être volatile ou non, pour le stockage de 2000 caractères alphanumériques d'une lettre ou d'un texte ;
- une mémoire "ligne" 22, en principe volatile qui contient les caractères affichés sur les moyens de visualisation 24.

L'agenda comporte également cinq dispositifs de commande et de contrôle qui assurent la saisie des données par le clavier 23, le chargement des mémoires, la visualisation et le cas échéant la transmission de données par l'intermédiaire de la prise prévue à cet effet. Ces circuits de commande sont rendus actifs par les touches de fonction 25.

Un dispositif de commande et de contrôle du bloc note 26 relié à la mémoire 20 de "bloc-note", aux claviers 23 et 25 et à la mémoire de "ligne" 22, permet la recherche dans la mémoire 20 d'une information suivant un critère donné et le transfert de cette information dans la mémoire 22

pour affichage (par exemple, recherche de l'adresse et du téléphone correspondant à un nom donné). Il permet également l'introduction et le classement de nouvelles informations dans la mémoire 20, l'effacement et/ou la modification d'informations précédemment inscrites dans la mémoire 20.

Un dispositif de commande et contrôle de texte 36, relié à la mémoire de "texte" 21 permet le transfert dans la mémoire de ligne 22 des données introduites au clavier 23, la modification du texte frappé (effacement et remplacement d'un caractère, d'un mot, d'une phrase, etc....). Il permet en outre le transfert du contenu de la mémoire de ligne 22 dans la mémoire de texte 21 et inversement. Il réalise encore des fonctions d'édition et de traitement de texte telles que saut de ligne, saut de phrase, saut de paragraphe.

Un dispositif de commande de télétransmission 27 relié à la mémoire de texte 21, les claviers 23 et 25 et la mémoire de ligne 22 permet, grâce à une prise de raccordement miniature 28, de transférer des informations vers un dispositif extérieur (lecteur-enregistreur de cassette, écran de télévision, téléphone, ordinateur, imprimante, etc...) ou de recevoir des informations provenant de ces dispositifs.

Un dispositif de calcul 29 permet en outre de réaliser des fonctions similaires à celles d'une calculatrice de poche programmable. Ce dispositif permet l'introduction de données numériques au clavier 23, leur affichage par l'intermédiaire de la mémoire de ligne 22 et l'exécution d'opérations commandées par le clavier 25 ainsi que l'affichage du résultat.

Un dispositif de contrôle de temps 30 comporte une horloge interne alimentée en permanence et des mémoires contenant également en permanence l'heure, la date, etc..... Ce dispositif est relié aux claviers 23 et 25, à la mémoire 20 et à la mémoire de ligne 22. Il permet l'affichage d'une information horaire, la remise à l'heure à partir du clavier 23, le réveil sonore à l'aide d'un dispositif éléctro-acoustique prévu à cet effet, à une heure déterminée et le rappel des rendez-vous par comparaison des éléments horaires lus dans la mémoire 20 et l'heure réelle, avec, ou non, émission d'un signal sonore et l'affichage du rendez-vous par la mémoire de ligne.

Ces différents dispositifs de commande et de contrôle sont réalisés à l'aide de circuits électroniques intégrés existants déja et réalisant séparement les différentes fonctions de ces dispositifs. Un microprocesseur associé à une mémoire de programme non volatile (mémoire à lecture seule) et plusieurs mémoires à lecture et écriture peuvent réaliser l'ensemble des fonctions de l'agenda, y compris la saisie des données des claviers 23 et 25 et l'affichage des caractères de la mémoire de ligne. Des circuits intégrés spéciaux peuvent, bien entendu, être réalisés et utilisés dans l'agenda pour diminuer l'encombrement et la consommation électrique d'une part, et pour accroître le nombre de fonctions qu'il peut réaliser d'autre part.

Les circuits d'alimentation de l'agenda, réduits à une batterie d'accumulation ou une pile, n'ont pas été représentés pour la clarté de la figure.

Revendications de brevet

1. Agenda électronique de poche caractérisé en ce qu'il comporte, dans un boîtier, des moyens d'entrées de données alphanumériques et de commandes, des moyens de mémorisation des données introduites, des moyens de visualisation d'au moins une partie des données introduites et mémorisées, des moyens de commande et de contrôle couplés aux moyens précédents, et des moyens d'alimentation électrique autonome.

2. Agenda selon la revendication 1, caractérisé en ce que le boîtier comporte au moins deux volets (1, 2) repliables autour d'une charnière (3), sur lesquels sont disposés les moyens d'entrées de données (4) et de commandes (8) et les moyens de visualisation (6) et en ce que les moyens d'entrées de données (4) sont constitués par un clavier de machine à écrire, l'ensemble des touches étant disposé sur au moins un volet.

3. Agenda selon la revendication 1, caractérisé en ce que le boîtier comporte trois volets (10, 11, 12) repliables les uns sur les autres, sur lesquels sont disposés les moyens d'entrées de données (4) et de commandes (8) et les moyens de visualisation (6), et en ce que les moyens d'entrées de données (4) sont constitués par un clavier à touches de machine à écrire, l'ensemble des touches étant réparti sur les trois volets.

4. Agenda électronique selon l'une des revendications précédentes, caractérisé en ce que les moyens de visualisation (6) comportent une ligne d'affichage alphanumérique.

5. Agenda électronique selon l'une des revendications précédentes, caractérisé en ce que les moyens de mémorisation comportent une première mémoire "bloc-note" (20) pour stocker de manière permanente des informations alphanumériques, même en cas d'arrêt de l'agenda, une deuxième mémoire de "texte" (21) pour le stockage des caractéres alphanumériques d'un texte ou d'une lettre, et une troisième mémoire de "ligne" (22) associée aux moyens de visualisation pour stocker des caractères alphanumériques qui sont visualisés.

6. Agenda électronique selon la revendication 5, caractérisé en ce que les moyens de commande et de contrôle comportent un dispositif de commande et de contrôle (26) de la première mémoire (20) pour rechercher des données déterminées dans cette mémoire et transférer ces données dans la troisième mémoire (22), pour inscrire de nouvelles données dans ladite première mémoire (20), pour effacer et pour modifier des données contenues dans cette mémoire (20).

7. Agenda électronique suivant la revendication 6, caractérisé en ce que les moyens de commande et de contrôle comportent en outre des dispositifs de commande et de contrôle (36) des deuxième (21) et troisième mémoires (22) pour tranférer des données provenant des moyens d'entrées (23, 25) dans la troisième mémoire (22) et pour échanger des données entre les deuxième et troisième mémoires (21, 22).

8. Agenda électronique selon l'une des revendications précédentes caractérisé en ce que les moyens de commande et de contrôle comportent en outre des moyens de transmission (27) de données couplés à une prise de raccordement miniature (28) pour transmettre des données contenues dans les deuxième et troisième mémoires (21, 22) vers un dispositif externe et pour enregistrer des données provenant d'un dispositif externe dans les deuxième et troisième mémoires.

9. Agenda électronique selon l'une des revendications précédentes caractérisé en ce que les moyens de commande et de contrôle comportent en outre un dispositif de calcul programmable (29) pour l'exécution d'opérations déterminées sur des données numériques d'entrée et l'affichage de ces données et du résultat.

10. Agenda électronique selon l'une des revendications précédentes, caractérisé en ce que les moyens de commande et de contrôle comportent en outre un dispositif de contrôle de temps (30) pour générer et stocker en permanence au moins une information horaire, pour afficher sur demande cette information horaire, pour comparer cette information horaire avec des informations lues dans la première mémoire (20) et pour l'émission d'un signal sonore et l'affichage d'informations déterminées en cas d'égalité.

FIG. 1

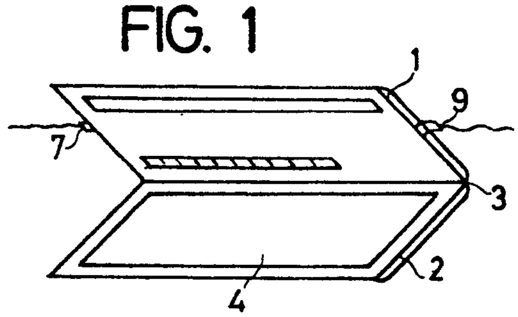
1
9
7
3
2
4

FIG 2

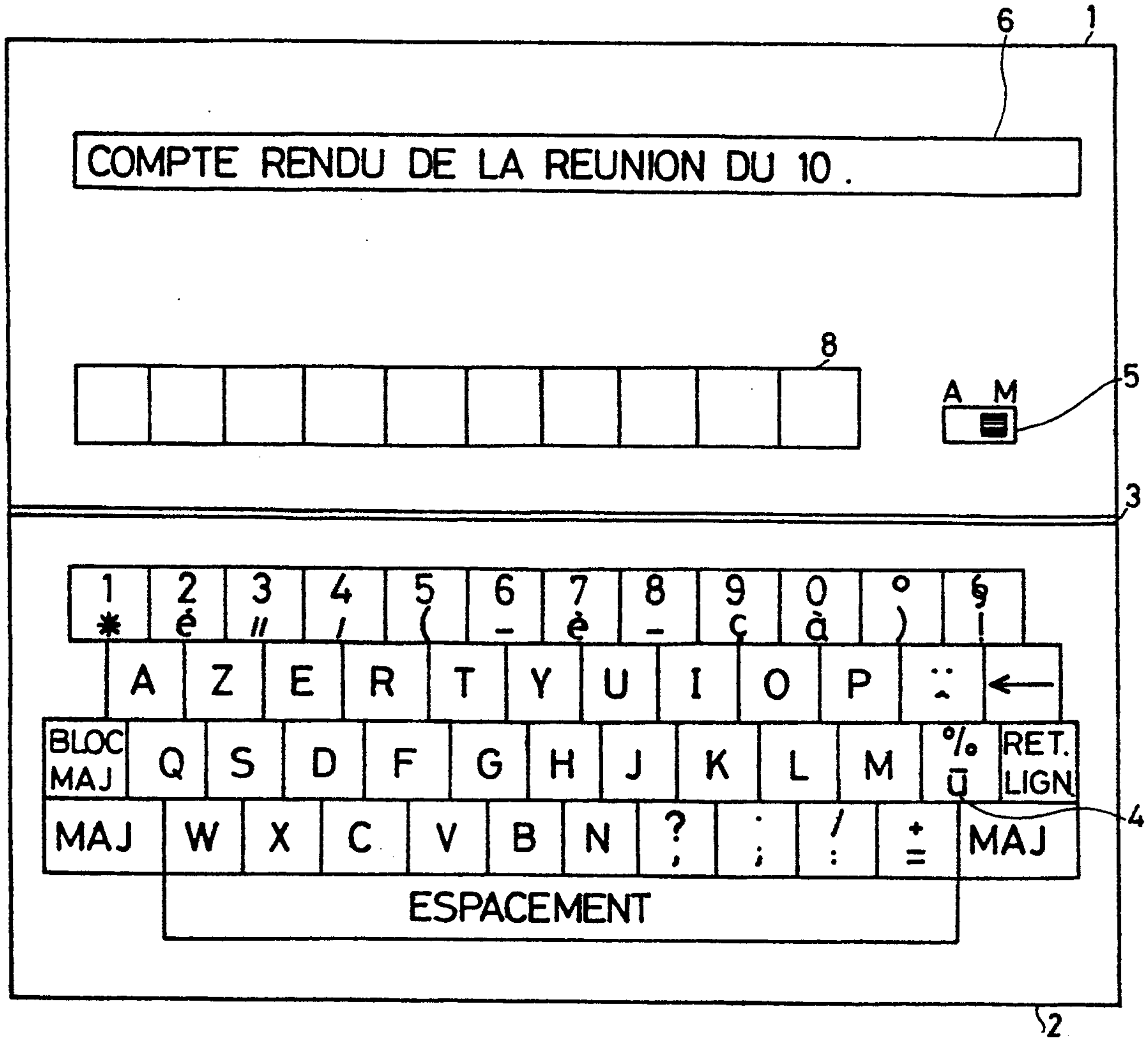
6
1
COMPTE RENDU DE LA REUNION DU 10 .
8
A M
5
3
1 2 3 4 5 6 7 8 9 0
é è ç à
A Z E R T Y U I O P
BLOC MAJ
Q S D F G H J K L M
%
ù
RET. LIGN
MAJ
W X C V B N
MAJ
4
ESPACEMENT
2

FIG. 4

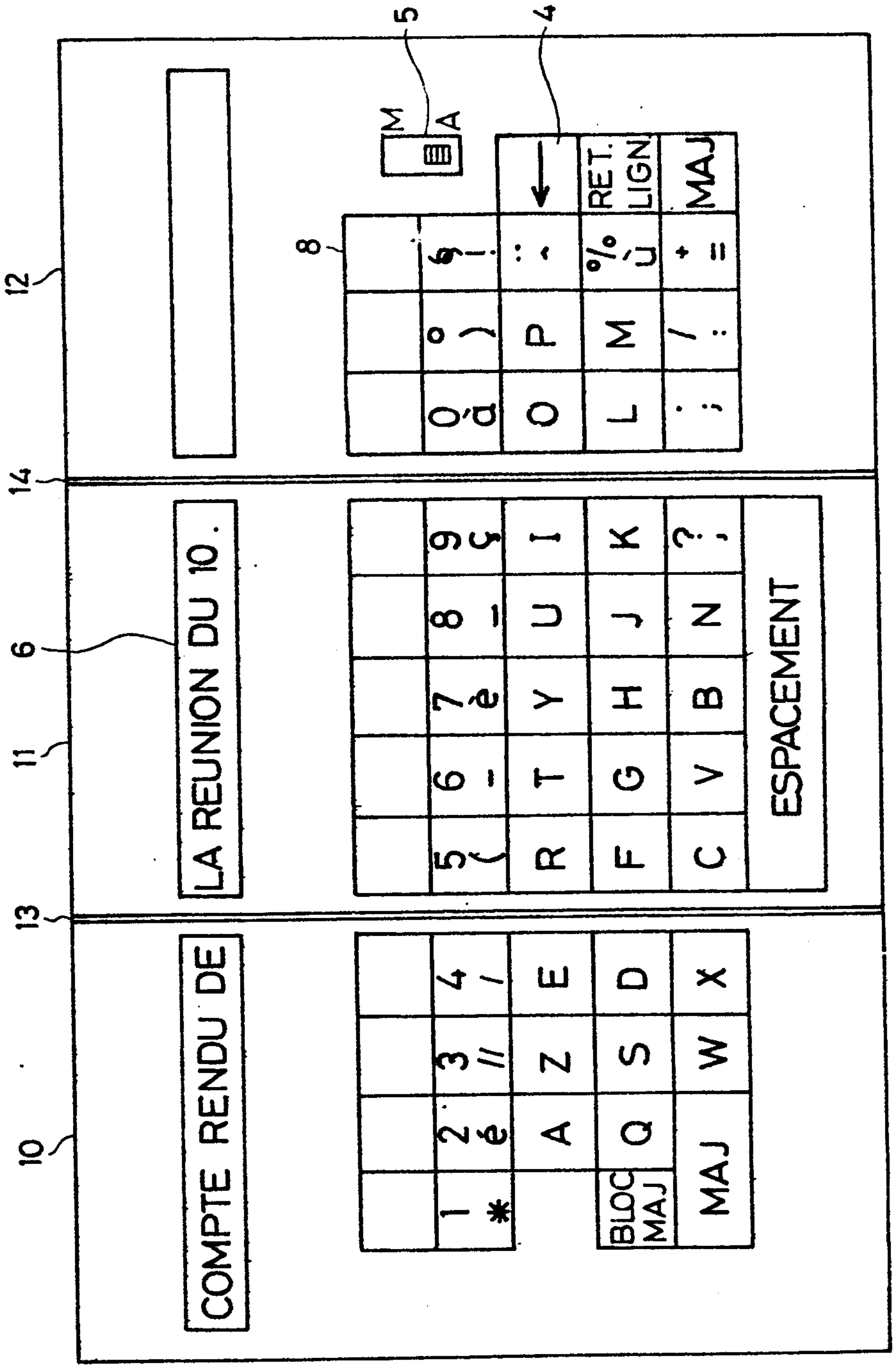

COMPTE RENDU DE
LA REUNION DU 10.
ESPACEMENT
BLOC MAJ
MAJ
RET. LIGN
MAJ
M
A
10
13
11
6
14
12
8
5
4


FIG. 3

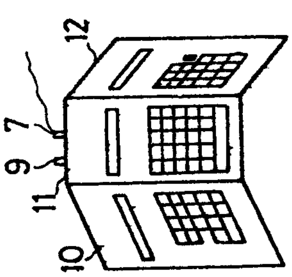

12
7
9
11
10

FIG. 5

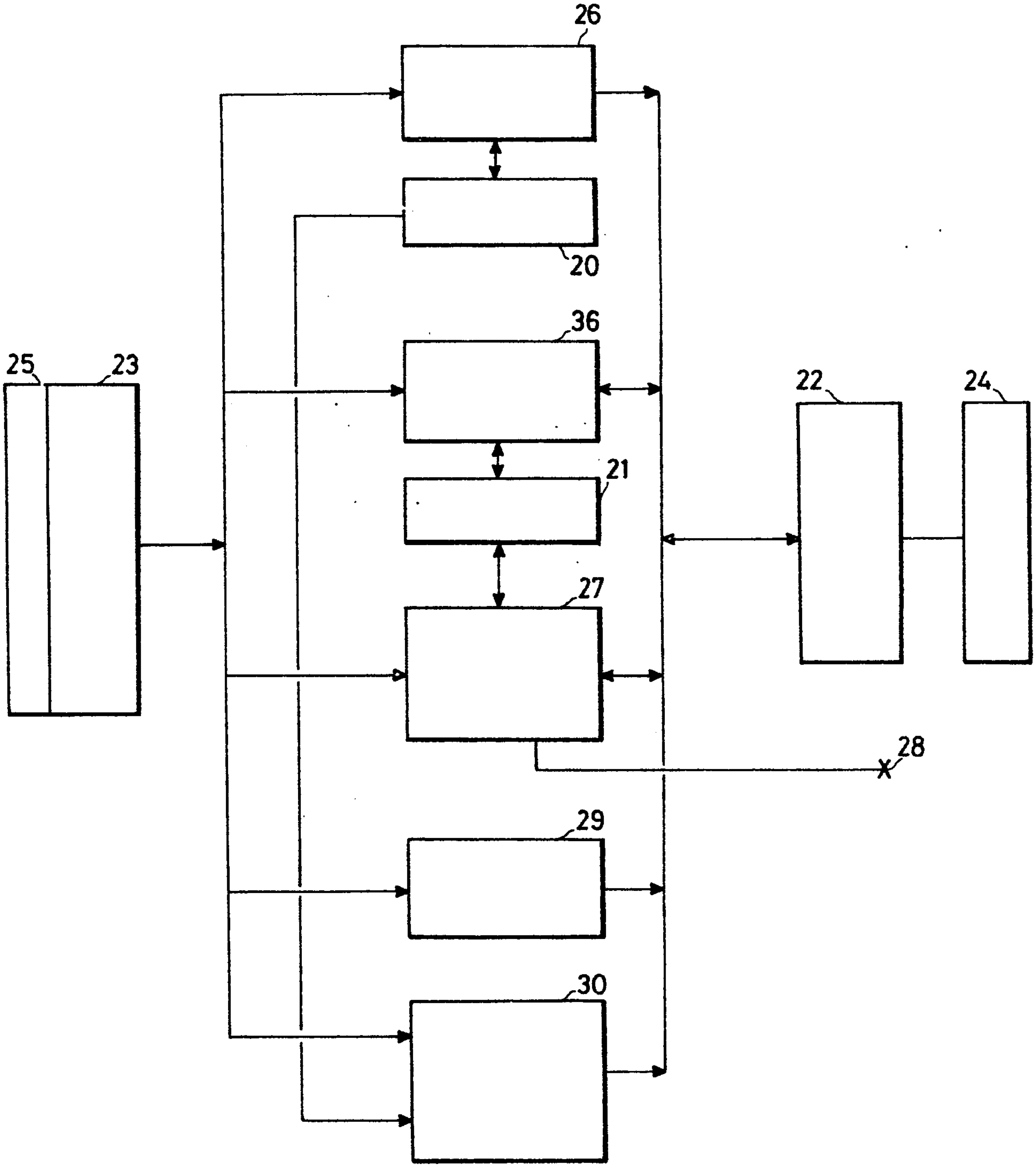

0005661

Office européen des brevets

# RAPPORT DE RECHERCHE EUROPEENNE

Numéro de la demande
EP 79 40 0289

## DOCUMENTS CONSIDERES COMME PERTINENTS

| Catégorie | Citation du document avec indication, en cas de besoin, des parties pertinentes | Revendication concernée |
|---|---|---|
| X | IBM TECHNICAL DISCLOSURE BULLETIN, vol. 19, no. 7, décembre 1976 NEW YORK (USA) HUBBARD "Personal Computer" pages 2419-2423 * en entier * | 1-8, 10 |
| X | DE - A 2 537 400 (BRAUN) * en entier * | 1,2, 4-10 |

CLASSEMENT DE LA DEMANDE (Int. Cl.²)

G 06 F 15/02
G 09 F 9/00

DOMAINES TECHNIQUES RECHERCHES (Int. Cl.²)

G 06 F

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 24-07-1979 | LEPEE |

OEB Form 1503.1 06.78